# EUROPEAN PATENT SPECIFICATION

(11) **EP 4 485 026 B1**
(45) Date of publication and mention of the grant of the patent: **01.07.2026**
(21) Application number: 23759522.8
(22) Date of filing: 17.01.2023
(51) Int. Cl.: G02B 6/38, G02B 6/40

(54) **FIRST CONNECTION BODY, FIRST OPTICAL CONNECTOR, SECOND CONNECTION BODY, SECOND OPTICAL CONNECTOR, AND OPTICAL CONNECTION STRUCTURE**
ERSTER VERBINDUNGSKÖRPER, ERSTER OPTISCHER VERBINDER, ZWEITER OPTISCHER VERBINDER, UND OPTISCHE VERBINDUNGSSTRUKTUR
PREMIER CORPS DE CONNEXION, PREMIER CONNECTEUR OPTIQUE, SECOND CORPS DE CONNEXION, SECOND CONNECTEUR OPTIQUE ET STRUCTURE DE CONNEXION OPTIQUE

(30) Priority: 24.02.2022 JP 2022026405
(43) Date of publication of application: 01.01.2025
(73) Proprietor: SUMITOMO ELECTRIC INDUSTRIES, LTD., Osaka-shi, Osaka 541-0041 (JP); Sumitomo Electric Optifrontier Co., Ltd., Yokohama-shi Kanagawa 244-8589 (JP)
(72) Inventor: SASAKI Dai, Osaka-shi, Osaka 541-0041 (JP); SHIBATA Masahiro, Yokohama-shi, Kanagawa 244-8589 (JP)
(74) Representative: TBK
(86) International application number: PCT/JP2023/001213
(87) International publication number: WO 2023/162516

(56) References cited:
- EP-A1- 3 037 856
- JP-A- 2003 177 278
- JP-A- 2004 151 670
- JP-A- 2012 032 656
- JP-A- 2016 122 104
- JP-A- H10 160 966
- US-A1- 2001 043 776
- US-A1- 2005 226 568
- US-A1- 2014 153 875
- US-A1- 2016 054 520
- US-A1- 2018 329 155
- US-A1- 2022 229 250

## Description

### Technical Field

The present disclosure relates to an optical connection structure, a first connector, a first optical connector, a second connector, a second optical connector, and a method of manufacturing the optical connection structure. This application claims priority based on Japanese Patent Application No. 2022-026405, filed on February 24, 2022.

### Background Art

Conventionally, an MPO connector is known as an optical connection structure for connecting a plurality of optical fibers together. According to the MPO connector, a high pressing force can be obtained between ferrules facing each other, and thus a stable Physical Contact (PC) connection can be realized. However, in the MPO connector, since a connection adapter is provided between the ferrules, there is a limit in realizing further miniaturization.

Thus, there is an optical connection structure in which no connection adapter is provided between the ferrules (see, for example, patent literature 1). In such an optical connection structure, the ferrules are connected to each other by inserting guiding pins provided on one ferrule into pin holes formed in the other ferrule and engaging claws of an optical connector housing provided on the other ferrule with the one ferrule.

### Citation List

### Patent Literature

Patent literature 1: Japanese Unexamined Patent Application Publication JP 2000-199833 A
Patent literature 2: JP 2016 122104 A disclosing a receptacle connector having the features of the preamble of claim 1

### Summary of Invention

It is the object of the present invention to provide an improved connector for being used in an optical connection structure to connect a first ferrule and a second ferrule to each other.
The above object is solved by a first connector having the features of claim 1. A second connector is stated in claim 5. A first optical connector is stated in claim 4. A second optical connector is stated in claim 7. An optical connection structure is stated in claim 8. Further developments are stated in the dependent claims.

### Brief Description of Drawings

FIG. 1 is a perspective view of an optical connection structure according to an embodiment.
FIG. 2 is a cross-sectional view of a first connection structure shown in FIG. 1.
FIG. 3 is a plan view of the first connection structure shown in FIG. 1.
FIG. 4 is a side view of the first connection structure shown in FIG. 1.
FIG. 5 is a view showing a connection structure between a guiding pin and a first connector shown in FIG. 1.
FIG. 6 is a cross-sectional view of a second connection structure shown in FIG. 1.
FIG. 7 is a plan view of the second connection structure shown in FIG. 1.
FIG. 8 is a side view of an engaging portion of a second connector shown in FIG. 1.
FIG. 9 is a flow chart showing manufacturing steps of the optical connection structure shown in FIG. 1.
FIG. 10 is a view showing the manufacturing step of the optical connection structure shown in FIG. 1.
FIG. 11 is a view showing the manufacturing steps of the optical connection structure shown in FIG. 1.
FIG. 12 is a cross-sectional view of the optical connection structure of a modification.

### Description of Embodiments

### [Problems to be Solved by Present Disclosure]

In the optical connection structure as described in patent literature 1, since the guiding pin is fixed to one of the ferrules, the accuracy of the optical connection may be reduced due to the deformation of the one ferrule caused by the fixation of the guiding pin.

### [Advantageous Effects of Present Disclosure]

According to the present disclosure, it is possible to provide an optical connection structure, a first connector, a first optical connector, a second connector, a second optical connector, and a method of manufacturing the optical connection structure, which are capable of realizing both miniaturization and a highly accurate optical connection.

### [Description of Embodiments of Present Disclosure]

An optical connection structure of the present disclosure connects a first ferrule configured to hold a plurality of first optical fibers and a second ferrule configured to hold a plurality of second optical fibers to each other. The optical connection structure includes a first connector provided on the first ferrule; a second connector provided on the second ferrule; a positioning member configured to define a relative position of the first ferrule and the second ferrule by being disposed in a first positioning hole extending through the first ferrule in a first direction in which a first tip end surface of the first ferrule and a second tip end surface of the second ferrule are connected to each other and by being inserted in a second positioning hole formed in the second tip end surface of the second ferrule; and an elastic member configured to apply an elastic force to at least one of the first ferrule and the second ferrule such that the first ferrule and the second ferrule come closer to each other in the first direction. The first connector includes a first support provided in the vicinity of a first rear end surface of the first ferrule opposite to the first tip end surface and configured to support the first ferrule in the first direction, and first fixing portions located around opposite sides of the first ferrule in a second direction crossing the first direction and formed integrally with the first support. The second connector includes a second support provided in the vicinity of a second rear end surface of the second ferrule opposite to the second tip end surface and configured to support the second ferrule in the first direction, and second fixing portions located around opposite sides of the second ferrule in the second direction and formed integrally with the second support. The first fixing portions are attachable and detachable to and from the second fixing portions. The positioning member is held by the first connector.

In this optical connection structure, the first connector includes the first support located in the vicinity of the first rear end surface of the first ferrule, and the first fixing portions formed integrally with the first support. The second connector includes the second support located in the vicinity of the second rear end surface of the second ferrule, and the second fixing portions formed integrally with the second support. The first fixing portions and the second fixing portions are fixed to each other, and thus the first ferrule and the second ferrule can be reliably connected to each other. Thus, it is possible to realize miniaturization of the optical connection structure. The positioning member is held by the first connector. When the positioning member is inserted into the second positioning hole of the second ferrule, the movement of the positioning member in the first direction can be restricted, and the reduction of the accuracy of the positioning of the first ferrule and the second ferrule can be prevented. Thus, a highly accurate optical connection can be realized. As described above, according to the optical connection structure, both of the miniaturization and the highly accurate optical connection can be realized.

The first fixing portions may include a pair of engaging holes located around opposite sides of the first ferrule in the second direction, the second fixing portions may include a pair of arms located around opposite sides of the second ferrule in the second direction and extending along the first direction, and the pair of arms may each include an engaging portion configured to engage with a corresponding one of the pair of engaging holes. Thus, the first fixing portions and the second fixing portions can be fixed by a simple structure.

The pair of engaging holes may each include a first region having a first width and a second region having a second width smaller than the first width, the second region communicating with the first region, and the engaging portion may each have a third width smaller than the first width and larger than the second width. With this configuration, the arms are inserted into the engaging holes so that the engaging portions pass through the first fixing portions in the first region, and then the arms are shifted toward the second region, whereby the engaging portions can be engaged with the first fixing portions. Thus, the first fixing portions and the second fixing portions can be easily attached and detached.

The first connector may further include a first claw located on one side of the first ferrule in a third direction and configured to hold the first ferrule in the third direction, the third direction crossing the first direction and the second direction. The second connector may further include second claws located on opposite sides of the second ferrule in the third direction and configured to hold the second ferrule in the third direction. Thus, it is possible to reliably hold each of the first ferrule and the second ferrule in the third direction.

The first connector and the second connector may be each formed of a plate-shaped member. Thus, it is possible to realize further miniaturization of the optical connection structure.

The elastic member may be provided at least one of between the first support portion and the first ferrule and between the second support and the second ferrule. Thus, the elastic force can be applied to at least one of the first ferrule and the second ferrule by a simple structure.

The optical connection structure may further include the first ferrule and the second ferrule. Thus, as described above, both of minimization and the highly accurate optical connection can be realized.

A first connector of the present disclosure is used in an optical connection structure to connect a first ferrule and a second ferrule to each other, the first ferrule being configured to hold a plurality of first optical fibers and the second ferrule being configured to hold a plurality of second optical fibers. In the optical connection structure, a relative position of the first ferrule and the second ferrule is defined by inserting a positioning member disposed in a first positioning hole, the first positioning hole extending through the first ferrule in a first direction in which a first tip end surface of the first ferrule and a second tip end surface of the second ferrule are connected to each other, into a second positioning hole formed in the second tip end surface of the second ferrule. The first connector is provided on the first ferrule. The first connector includes a first support provided in the vicinity of a first rear end surface of the first ferrule opposite to the first tip end surface and configured to support the first ferrule in the first direction, and first fixing portions located around opposite sides of the first ferrule in a second direction crossing the first direction and formed integrally with the first support. The first fixing portions are attachable and detachable to and from a second connector provided on the second ferrule. The first connector is configured to hold the positioning member.

The first connector includes the first support located in the vicinity of the first rear end surface of the first ferrule and the first fixing portions formed integrally with the first support. With this configuration, the first fixing portions are fixed to the second connector provided in the second ferrule, and thus the first ferrule and the second ferrule can be reliably connected to each other. Thus, it is possible to realize miniaturization of the optical connection structure. The positioning member is held by the first connector located in the vicinity of the first rear end surface of the first ferrule. Thus, when the positioning member is inserted into the second positioning hole of the second ferrule, the movement of the positioning member in the first direction can be restricted, and the reduction of the accuracy of the positioning of the first ferrule and the second ferrule can be prevented. Thus, the highly accurate optical connection can be realized. As described above, according to the first connector, both of minimization and the highly accurate optical connection can be realized.

The first fixing portions may include a pair of engaging holes located around opposite sides of the first ferrule in the second direction, and engaging portions of the second connector may be configured to engage with a corresponding one of the pair of engaging holes. Thus, the first fixing portions can be fixed to the second connector by a simple structure.

The first connector may further include a first claw located on one side of the first ferrule in a third direction and configured to hold the first ferrule in the third direction, the third direction crossing the first direction and the second direction. Thus, it is possible to reliably hold the first ferrule in the third direction.

The first connector may further include an attachment integrally formed with the first support and configured to attach the first support to a circuit board. Thus, the first ferrule can be fixed to the circuit board via the fixing portions and the first support.

The first connector may be formed of a plate-shaped member. Thus, it is possible to realize further miniaturization of the optical connection structure.

A first optical connector of the present disclosure includes the first connector and the first ferrule. Thus, as described above, both of minimization and the highly accurate optical connection can be realized.

A second connector is used in an optical connection structure to connect a first ferrule and a second ferrule to each other, the first ferrule being configured to hold a plurality of first optical fibers and the second ferrule being configured to hold a plurality of second optical fibers. The second connector is provided on the second ferrule. The second connector includes a second support provided in the vicinity of a second rear end surface side of the second ferrule opposite to a second tip end surface of the second ferrule and configured to support the second ferrule in a first direction in which a first tip end surface of the first ferrule and the second tip end surface of the second ferrule are connected to each other, second fixing portions located around opposite sides of the second ferrule in a second direction crossing the first direction and formed integrally with the second support, and a pair of second claws located around opposite sides of the second ferrule in a third direction and configured to hold the second ferrule in the third direction, the third direction crossing the first direction and the second direction. The second fixing portions are attachable and detachable to and from a first connector provided on the first ferrule.

The second connector includes the second support located in the vicinity of the second rear end surface of the second ferrule, and the second fixing portions formed integrally with the second support. With this configuration, the first ferrule and the second ferrule can be reliably connected to each other by fixing the second fixing portions to the first connector provided in the first ferrule. Thus, it is possible to realize miniaturization of the optical connection structure. The second connector includes the pair of second claws that hold the second ferrule in the third direction. Thus, it is possible to reliably hold the second ferrule in the third direction, and contribute to the highly accurate optical connection. Thus, according to the second connector, it is possible to realize both miniaturization and the highly accurate optical connection.

The second fixing portion may include a pair of arms located around opposite sides of the second support in the second direction and extending along the first direction, and the pair of arms each include an engaging portion configured to engage with an engaging hole of the first connector. Thus, the second fixing portions can be fixed to the first connector by a simple structure.

The engaging portion may include a portion inclined inward or outward with respect to the first direction. Thus, the engaging portion can be smoothly inserted into the engaging hole.

The pair of second claws may be formed integrally with the second fixing portions. Thus, the second ferrule can be held by a simple structure.

The second connector may be formed of a plate-shaped member. Thus, it is possible to realize further miniaturization of the optical connection structure.

The second optical connector of the present disclosure includes the second connector and the second ferrule. Thus, as described above, both of minimization and the highly accurate optical connection can be realized.

A method of manufacturing an optical connection structure of the present disclosure is a method of manufacturing an optical connection structure for connecting a first ferrule configured to hold a plurality of first optical fibers and a second ferrule configured to hold a plurality of second optical fibers to each other. The method includes preparing the first ferrule, the second ferrule, a first connector, a second connector, a positioning member, and an elastic member, the first ferrule including a first tip end surface, a first rear end surface opposite to the first tip end surface, and a first positioning hole extending between the first tip end surface and the first rear end surface, the second ferrule including a second tip end surface configured to be connected to the first tip end surface in a first direction, a second rear end surface opposite to the second tip end surface, and a second positioning hole formed in the second tip end surface, the first connector being configured to connect the first ferrule and the second ferrule to each other, the second connector being configured to connect the first ferrule and the second ferrule to each other, the positioning member defining a relative position of the first ferrule and the second ferrule, and the elastic member being configured to apply an elastic force to at least one of the first ferrule and the second ferrule such that the first ferrule and the second ferrule come closer to each other in the first direction, providing the first connector from a side on which the first rear end surface of the first ferrule is located, providing the second connector from a side on which the second rear end surface of the second ferrule is located, bringing the first tip end surface of the first ferrule and the second tip end surface of the second ferrule into contact with each other, and connecting the first connector and the second connector to each other. In the providing the first connector, the positioning member is inserted into the first positioning hole from the first rear end surface in a state where the positioning member is held by the first connector such that the positioning member projects from the first tip end surface. In the bringing the first tip end surface of the first ferrule and the second tip end surface of the second ferrule into contact with each other, the positioning member projecting from the first tip end surface is inserted into the second positioning hole in a state where the positioning member is held by the first connector. In the connecting the first connector and the second connector to each other, the first connector and the second connector are connected to each other such that the first tip end surface and the second tip end surface are pressed against each other by an elastic force of the elastic member.

In the connecting of the method, the first connector and the second connector are connected to each other such that the first tip end surface and the second tip end surface are pressed against each other by the elastic force of the elastic member. Thus, the optical connection structure can be miniaturized. In addition, in the providing, the positioning member is inserted into the first positioning hole from the first rear end surface in a state where the positioning member is held by the first connector such that the positioning member projects from the first tip end surface, and in the bringing, the positioning member projecting from the first tip end surface is inserted into the second positioning hole in a state where the positioning member is held by the first connector. Thus, when the positioning member is inserted into the second positioning hole of the second ferrule, the movement of the positioning member in the first direction can be restricted, and the reduction of the accuracy of the positioning of the first ferrule and the second ferrule can be prevented. Thus, the highly accurate optical connection can be realized. As described above, according to this method, it is possible to realize both miniaturization and the highly accurate optical connection.

### [Details of Embodiments of Present Disclosure]

Specific examples of an optical connection structure and a method of manufacturing the optical connection structure according to an embodiment of the present disclosure will be described with reference to the drawings. The present disclosure is not limited to these examples, but is defined by the scope of the claims, and is intended to include all modifications within the meaning and scope equivalent to the scope of the claims.

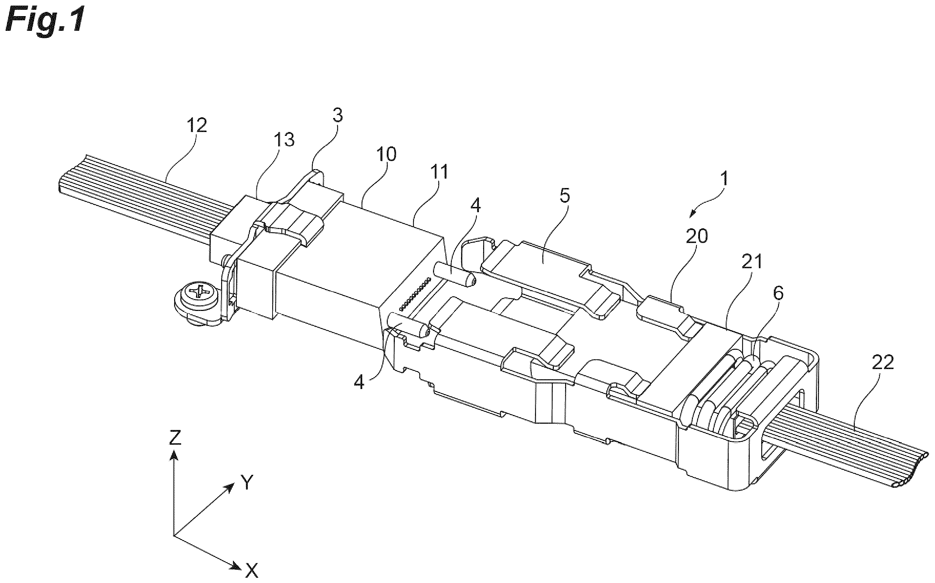

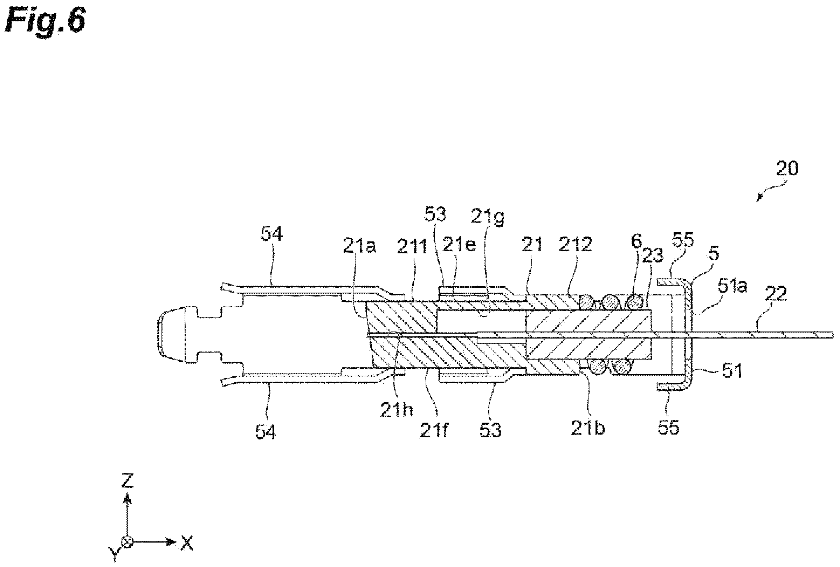

As shown in FIG. 1, an optical connection structure 1 connects a ferrule 11 holding a plurality of optical fibers 12 and a ferrule 21 holding a plurality of optical fibers 22 each other. Optical connection structure 1 includes an optical connector 10 and an optical connector 20. Optical connector 10 includes ferrule (first ferrule) 11, the plurality of optical fibers (first optical fibes) 12, a boot 13, a connector (first connector) 3, and positioning members (guiding pins) 4. Optical connector 20 includes ferrule (second ferrule) 21, the plurality of optical fibers (second optical fibers) 22, a boot 23 (see FIG. 6), a connector (second connector) 5, and an elastic member 6.

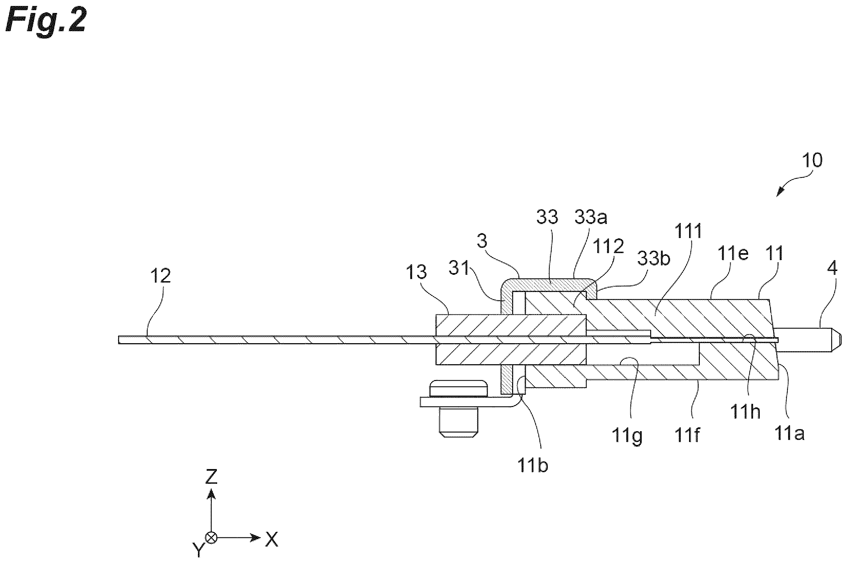

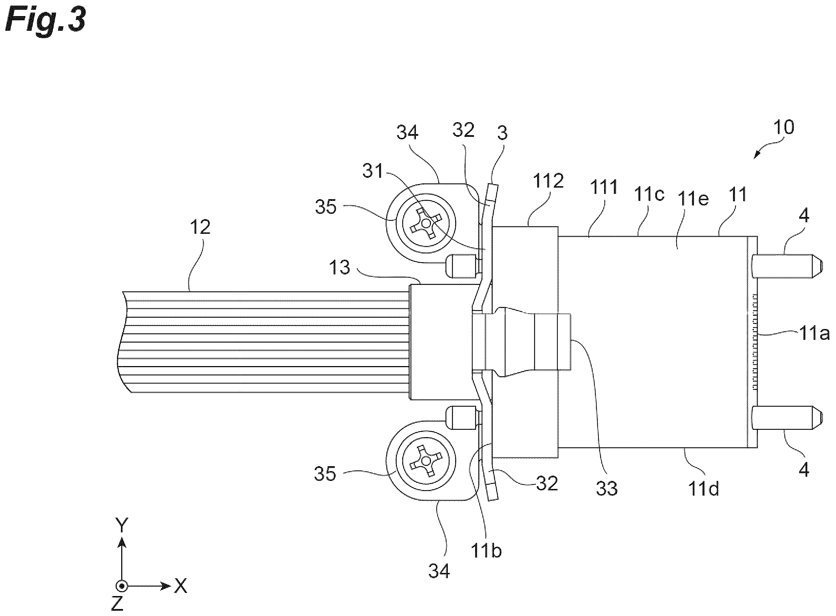

As shown in FIGS. 2 and 3, ferrule 11 has a tip end surface (first tip end surface) 11a, a rear end surface (first rear end surface) 11b, side surfaces 11c and 11d, and main surfaces 11e and 11f. Tip end surface 11a is located at the front end of ferrule 11. Tip end surface 11a intersects with the X-axis direction (first direction). Tip end surface 11a is inclined with respect to the YZ plane. The angle formed by tip end surface 11a and the YZ plane is, for example, 4° to 16°. Thus, the reflected light can be released. Rear end surface 11b is located at the rear end of ferrule 11. That is, rear end surface 11b faces the opposite side to tip end surface 11a in the X-axis direction. Rear end surface 11b intersects the X-axis direction.

Side surfaces 11c and 11d are located between tip end surface 11a and rear end surface 11b. Side surfaces 11c and 11d intersect the Y-axis direction (second direction intersecting the X-axis direction). Side surfaces 11c and 11d face opposite sides each other in the Y-axis direction. Main surfaces 11e and 11f are located between tip end surface 11a and rear end surface 11b. Main surfaces 11e and 11f intersect the Z-axis direction (the third direction intersecting the X-axis direction and the Y-axis direction). Main surfaces 11e and 11f face opposite sides each other in the Z-axis direction.

Ferrule 11 has an accommodating portion 11g. Accommodating portion 11g is a space formed inside ferrule 11. Accommodating portion 11g is opened to rear end surface 11b. Accommodating portion 11g does not reach tip end surface 11a. Ferrule 11 has a plurality of fiber holes 11h. In the embodiment, ferrule 11 has twelve fiber holes 11h. Each fiber hole 11h extends along the X-axis direction. Fiber holes 11h are arranged in a line along the Y-axis direction. Each fiber hole 11h is opened in tip end surface 11a and communicates with accommodating portion 11g.

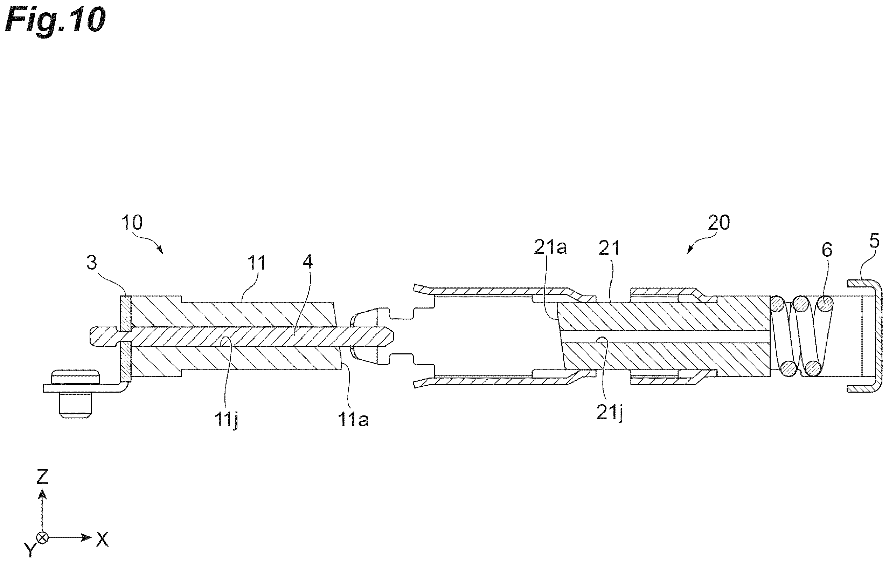

Ferrule 11 has a pair of first positioning holes 11j (see FIG. 10). The pair of positioning holes 11j is located on both sides of the plurality of fiber holes 11h in the Y-axis direction. Positioning hole 11j extends along the X-axis direction. Positioning hole 11j penetrates ferrule 11 in the X-axis direction. That is, positioning hole 11j is opened to each of tip end surface 11a and rear end surface 11b. Ferrule 11 and ferrule 21 are positioned by positioning members 4 each disposed in positioning hole 11j.

Ferrule 11 includes a main body 111 and a flange 112. Main body 111 is a portion of ferrule 11 close to tip end surface 11a. Flange 112 is a portion of ferrule 11 close to rear end surface 11b. The length of main body 111 in the X-axis direction is about three times the length of flange 112 in the X-axis direction. When viewed from the X-axis direction, the outer edge of flange 112 is located outside the outer edge of main body 111. That is, when viewed from the X-axis direction, flange 112 is slightly larger than main body 111. A step is formed between main body 111 and flange 112.

The material of ferrule 11 is, for example, polyphenylene sulfide (PPS), polyetherimide (PEI), polybutylene terephthalate (PBT), polycarbonate (PC), polymethyl methacrylate (PMMA), polyether sulfone (PES), polyamide (PA), or cycloolefin polymer (COP).

In the embodiment, optical connector 10 has twelve optical fibers 12. Optical fibers 12 are arranged in a line along the Y-axis direction. Optical fiber 12 extends along the X-axis direction. Optical fiber 12 is, for example, a glass fiber including a core and a cladding surrounding the core. Optical fiber 12 has, for example, a cylindrical shape. An end of optical fiber 12 is inserted into fiber hole 11h. The end face of optical fiber 12 reaches tip end surface 11a. That is, the end face of optical fiber 12 is exposed to the outside at tip end surface 11a. In this way, ferrule 11 holds the end portion of optical fiber 12.

Boot 13 is provided in accommodating portion 11g. Boot 13 covers the plurality of optical fibers 12 in a part of accommodating portion 11g. Boot 13 fills a part of accommodating portion 11g. A part of boot 13 protrudes from rear end surface 11b.

Positioning members 4 define a relative position of ferrule 11 and ferrule 21 in the direction intersecting the X-axis direction. Each positioning member 4 is disposed in positioning hole 11j of ferrule 11. Positioning member 4 is inserted into a positioning hole (second positioning hole) 21j of ferrule 21. Positioning member 4 has, for example, a cylindrical shape. Positioning member 4 is, for example, a metal guiding pin. Positioning member 4 is inserted into positioning hole 11j. The diameter of positioning member 4 is smaller than the inner diameter of positioning holes 11j and 21j.

Positioning member 4 is slidable with respect to positioning holes 11j and 21j in the X-axis direction. That is, positioning member 4 is movable with respect to ferrule 11 and ferrule 21 in the X-axis direction. The tip of positioning member 4 is chamfered (C-chamfered or R-chamfered). Thus, when positioning member 4 is inserted into positioning holes 11j and 21j, positioning member 4 can be guided by the chamfered portions.

Connector (plug) 3 is provided on ferrule 11. Connector 3 is a member for connecting ferrule 11 to ferrule 21. Connector 3 is formed by a plate-shaped member. The material of connector 3 is, for example, metal or resin. Connector 3 includes a support (first support) 31, fixing portions (first fixing portion) 32, a claw (first claw) 33, and attachments 34.

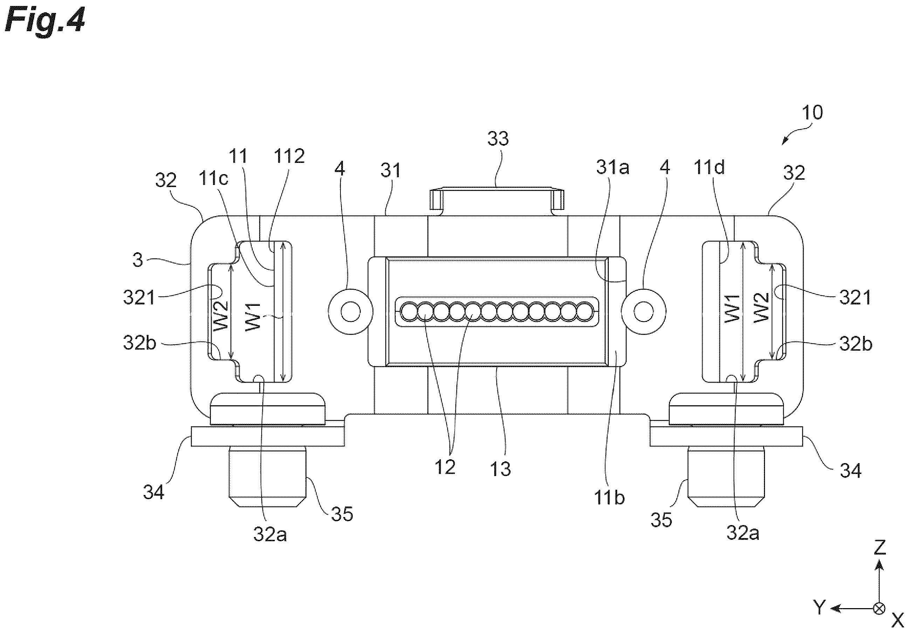

As shown in FIGS. 3 and 4, support 31 is provided in the vicinity of rear end surface 11b of ferrule 11. Support 31 is provided on the side opposite to ferrule 21 with respect to ferrule 11. Support 31 is a portion of connector 3 that overlaps ferrule 11 when viewed from the X-axis direction. Support 31 has a plate-shaped configuration extending along rear end surface 11b. Support 31 supports ferrule 11 in the X-axis direction. Support 31 restricts ferrule 11 from being separated from ferrule 21 in the X-axis direction. At least a portion of support 31 is in contact with rear end surface 11b. In the embodiment, both ends of support 31 in the Y-axis direction are in contact with rear end surface 11b.

In the embodiment, the central portion of support 31 in the Y-axis direction is not in contact with rear end surface 11b. That is, in a state where both ends of support 31 are in contact with rear end surface 11b, the central portion of support 31 is separated from rear end surface 11b. Support 31 has a through hole 31a. Through hole 31a surrounds boot 13 and the plurality of optical fibers 12 when viewed from the X-axis direction. Connector 3 is disposed in the vicinity of rear end surface 11b so that the plurality of optical fibers 12 and boot 13 penetrate through hole 31a.

Fixing portions 32 are portions of connector 3 that are located on both sides of support 31 in the Y-axis direction. Fixing portions 32 are located around both sides of ferrule 11 in the Y-axis direction. Fixing portions 32 do not overlap ferrule 11 when viewed from the X-axis direction. Fixing portions 32 each have a plate shape that extends along rear end surface 11b. Fixing portions 32 are integrally formed with support 31. The term "integrally formed" means that a plurality of portions are not separated from each other. For example, when one member and another member are fixed to each other, one member and another member are integrally formed. For example, one portion and another portion of one member are integrally formed. In the embodiment, each of support 31 and fixing portions 32 is a part of connector 3 formed by the same material.

Fixing portions 32 include a pair of engaging holes 321. The pair of engaging holes 321 is located around both sides of ferrule 11 in the Y-axis direction. Engaging hole 321 penetrates fixing portion 32. Engaging hole 321 includes a first region 32a and a second region 32b. Second region 32b is located on the opposite side of first region 32a from support 31. Second region 32b communicates with first region 32a. A width (second width) W2 of second region 32b in the Z-axis direction is smaller than a width (first width) W1 of first region 32a in the Z-axis direction. The width of second region 32b in the Y-axis direction is smaller than the width of first region 32a in the Y-axis direction. Note that a part of first region 32a may reach support 31. Fixing portions 32 are attachable and detachable to and from connector 5.

Claw 33 is located on one side of ferrule 11 in the Z-axis direction. Claw 33 is formed at one end of support 31 in the Z-axis direction. Claw 33 is located at the center of support 31 in the Y-axis direction. Claw 33 extends from one end of support 31 toward tip end surface 11a. Claw 33 is located on main surface 11e of ferrule 11. Claw 33 has a plate shape that extends along main surface 11e. Claw 33 is integrally formed with support 31.

Claw 33 includes a first portion 33a and a second portion 33b. First portion 33a overlaps flange 112 of ferrule 11 when viewed from the Z-axis direction. First portion 33a has a plate shape that extends along main surface 11e of ferrule 11. First portion 33a holds ferrule 11 in the Z-axis direction. First portion 33a restricts the movement of ferrule 11 in the Z-axis direction.

Second portion 33b is provided at one end of first portion 33a in the X-axis direction (one end on the opposite side to support 31). Second portion 33b extends from one end of first portion 33a toward main surface 11f of ferrule 11. Second portion 33b overlaps main body 111 of ferrule 11 when viewed from the Z-axis direction. Second portion 33b holds ferrule 11 in the X-axis direction. Second portion 33b restricts the movement of ferrule 11 in the X-axis direction. When ferrule 11 moves in a direction away from support 31, second portion 33b comes into contact with flange 112 (the step between main body 111 and flange 112).

Each attachment 34 is formed at an end of each fixing portion 32 in the Z-axis direction. Attachment 34 extends from the end of fixing portion 32 toward the side opposite to ferrule 11. Attachment 34 has a plate shape that extends along main surface 11f. Attachment 34 is integrally formed with fixing portion 32. That is, attachments 34 are integrally formed with support 31. Attachment 34 has a through hole in which a bolt 35 is disposed. Attachment 34 is fixed to the wiring board by bolt 35. Thus, attachments 34 mount support 31, fixing portions 32, claw 33, and ferrule 11 on the circuit board.

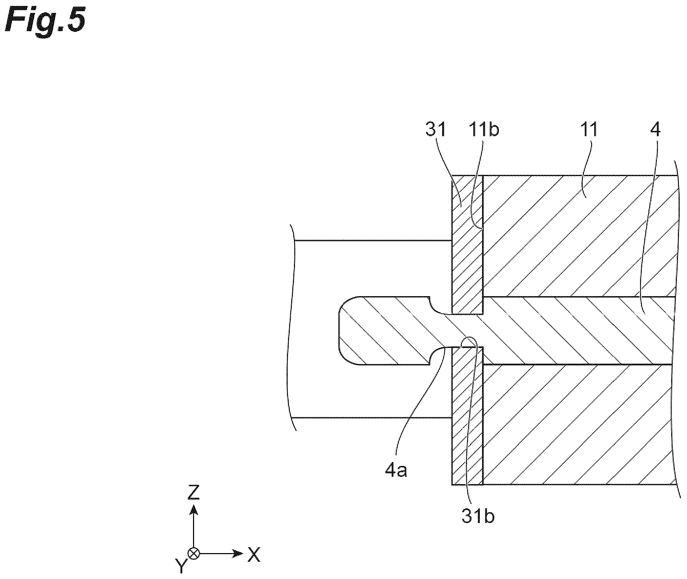

As shown in FIG. 5, each positioning member 4 is held by connector 3. Specifically, support 31 of connector 3 has a through hole 31b. Through holes 31b are located on both sides of through hole 31a (see FIG. 4) in the Y-axis direction. When viewed from the X-axis direction, through hole 31b is located between through hole 31a and engaging hole 321. Through hole 31b has, for example, a semicircular shape. When viewed from the X-axis direction, the center of through hole 31b substantially coincides with the center of positioning hole 11j. The inner diameter of through hole 31b is smaller than the diameter of positioning member 4. A recess 4a is formed at an end of positioning member 4.

The diameter of recess 4a is smaller than the inner diameter of through hole 31b. An absolute value of a difference between a diameter of recess 4a and an inner diameter of through hole 31b is greater than an absolute value of a difference between a diameter of positioning member 4 and an inner diameter of positioning hole 11j. Thus, the accuracy of the diameter of positioning member 4 and the inner diameter of positioning hole 11j can be prioritized, and the accuracy of the positioning of ferrule 11 and ferrule 21 can be improved. Recess 4a of positioning member 4 is disposed in through hole 31b. Thus, the movement of positioning member 4 with respect to support 31 is restricted.

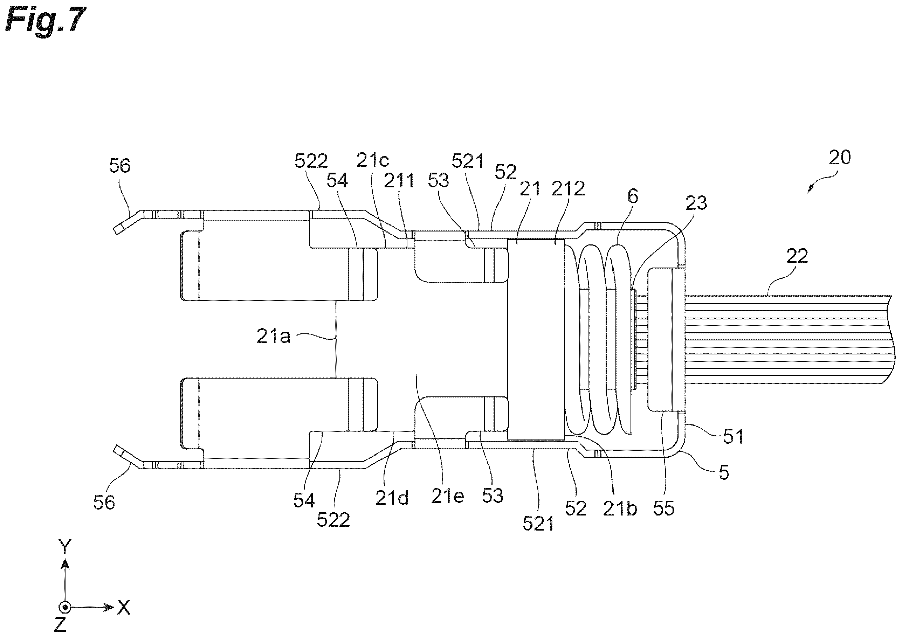

As shown in FIGS. 6 and 7, ferrule 21 has a tip end surface (second tip end surface) 21a, a rear end surface (second rear end surface) 21b, side surfaces 21c and 21d, and main surfaces 21e and 21f. Tip end surface 21a is located at the front end of ferrule 21. Tip end surface 21a intersects with the X-axis direction (first direction). Tip end surface 21a is inclined with respect to the YZ plane. The angle formed by tip end surface 21a and the YZ plane is, for example, 4° to 16°. Thus, the reflected light can be released. Rear end surface 21b is located at the rear end of ferrule 21. That is, rear end surface 21b faces the opposite side to tip end surface 21a in the X-axis direction. Rear end surface 21b intersects the X-axis direction.

Side surfaces 21c and 21d are located between tip end surface 21a and rear end surface 21b. Side surfaces 21c and 21d intersect with the Y-axis direction. Side surfaces 21c and 21d face opposite sides in the Y-axis direction. Main surfaces 21e and 21f are located between tip end surface 21a and rear end surface 21b. Main surfaces 21e and 21f intersect with the Z-axis direction. Main surfaces 21e and 21f face opposite sides in the Z-axis direction. Ferrule 21 is disposed such that tip end surface 21a faces tip end surface 11a of ferrule 11 in the X-axis direction. Tip end surface 21a is connected to tip end surface 11a in the X-axis direction. Ferrule 21 and ferrule 11 are arranged in the X-axis direction.

Ferrule 21 includes an accommodating portion 21g. Accommodating portion 21g is a space formed inside ferrule 21. Accommodating portion 21g is opened to rear end surface 21b. Accommodating portion 21g does not reach tip end surface 21a. Ferrule 21 has a plurality of fiber holes 21h. In the embodiment, ferrule 21 has twelve fiber holes 21h. Each fiber hole 21h extends along the X-axis direction. Fiber holes 21h are arranged in a line along the Y-axis direction. Each fiber hole 21h is opened in tip end surface 21a and communicates with accommodating portion 21g.

Ferrule 21 has a pair of positioning holes 21j (see FIG. 10). The pair of positioning holes 21j is formed in tip end surface 21a. The pair of positioning holes 21j is located on both sides of the plurality of fiber holes 21h in the Y-axis direction. Positioning holes 21j extend along the X-axis direction. Positioning holes 21j penetrate ferrule 21 in the X-axis direction. That is, each of positioning holes 21j is opened to each of tip end surface 21a and rear end surface 21b. The inner diameter of positioning hole 21j is larger than the diameter of positioning member 4. The inner diameter of positioning hole 21j is substantially the same as the inner diameter of positioning hole 11j. Ferrule 11 and ferrule 21 are positioned by positioning members 4 each inserted into positioning hole 21j.

Ferrule 21 includes a main body 211 and a flange 212. Main body 211 is a portion of ferrule 21 close to tip end surface 21a. Flange 212 is a portion of ferrule 21 close to rear end surface 21b. The length of main body 211 in the X-axis direction is about three times the length of flange 212 in the X-axis direction. When viewed from the X-axis direction, the outer edge of flange 212 is located outside the outer edge of main body 211. That is, when viewed from the X-axis direction, flange 212 is slightly larger than main body 211. A step is formed between main body 211 and flange 212.

The material of ferrule 21 is, for example, polyphenylene sulfide (PPS), polyetherimide (PEI), polybutylene terephthalate (PBT), polycarbonate (PC), polymethyl methacrylate (PMMA), polyether sulfone (PES), polyamide (PA), or cycloolefin polymer (COP).

In the embodiment, optical connector 20 has twelve optical fibers 22. Optical fibers 22 are arranged in a line along the Y-axis direction. Optical fibers 22 extend along the X-axis direction. Optical fiber 22 is, for example, a glass fiber including a core and a cladding surrounding the core. Optical fiber 22 has, for example, a cylindrical shape. An end portion of optical fiber 22 is inserted into fiber hole 21h. The end face of optical fiber 22 reaches the tip end surface 12a. That is, the end face of optical fiber 22 is exposed to the outside at tip end surface 21a. In this way, ferrule 21 holds the end portion of optical fiber 22.

Boot 23 is provided in accommodating portion 21g. Boot 23 covers the plurality of optical fibers 22 in a part of accommodating portion 21g. Boot 23 fills a part of accommodating portion 21g. A part of boot 23 protrudes from rear end surface 21b.

Connector (socket) 5 is provided on ferrule 21. Connector 5 is a member for connecting ferrule 21 to ferrule 11. Connector 5 is formed by a plate-shaped member. The material of connector 5 is, for example, metal or resin. Connector 5 includes a support (second support) 51, fixing portions (second fixing portions) 52, and pairs of claws (second claws) 53, 54, and 55. Support 51 is provided in the vicinity of rear end surface 21b of ferrule 21. Support 51 is provided on the side opposite to ferrule 11 with respect to ferrule 21. Support 51 is a portion of connector 5 that overlaps ferrule 21 when viewed from the X-axis direction. Support 51 has a plate-shaped configuration extending along rear end surface 21b.

Support 51 supports ferrule 21 in the X-axis direction. Support 51 restricts ferrule 21 from being separated from ferrule 11 in the X-axis direction. Support 51 has a through hole 51a. Through hole 51a surrounds boot 23 and the plurality of optical fibers 22 when viewed from the X-axis direction. Connector 5 is disposed in the vicinity of rear end surface 21b so that boot 23 and the plurality of optical fibers 22 pass through through hole 51a.

Fixing portions 52 are portions of connector 5 that are located on both sides of support 51 in the Y-axis direction. Fixing portions 52 are located around both sides of ferrule 21 in the Y-axis direction. Fixing portions 52 do not overlap ferrule 21 when viewed from the X-axis direction. Fixing portion 52 has a plate-shaped member extending along side surfaces 21c and 21d. Fixing portions 52 are integrally formed with support 51. In the embodiment, each of support 51 and fixing portions 52 is a part of connector 5 formed by the same material.

Fixing portions 52 include a pair of holding arms 521 and a pair of engaging arms 522. The pair of holding arms 521 is located on both sides of ferrule 21 in the Y-axis direction. Holding arms 521 extend from both ends of support 51 in the Y-axis direction toward tip end surface 21a. Holding arms 521 have a plate-shaped member extending along side surfaces 21c and 21d. Holding arms 521 are integrally formed with support 51. The distance between holding arms 521 in the Y-axis direction is substantially the same as the width of flange 212 of ferrule 21 in the Y-axis direction. Holding arms 521 hold ferrule 21 in the Y-axis direction.

Engaging arm 522 is connected to an end of holding arm 521 on the side opposite to support 51. The pair of engaging arms 522 is located on both sides of ferrule 21 in the Y-axis direction. Engaging arms 522 extend along the X-axis direction. Engaging arms 522 each have a plate shape that extends along side surfaces 21c and 21d. Each engaging arm 522 is integrally formed with holding arm 521. The distance between holding arms 521 in the Y-axis direction is greater than the width of flange 212 of ferrule 21 in the Y-axis direction. Engaging arm 522 has elasticity. Engaging arm 522 is deformable in the Y-axis direction.

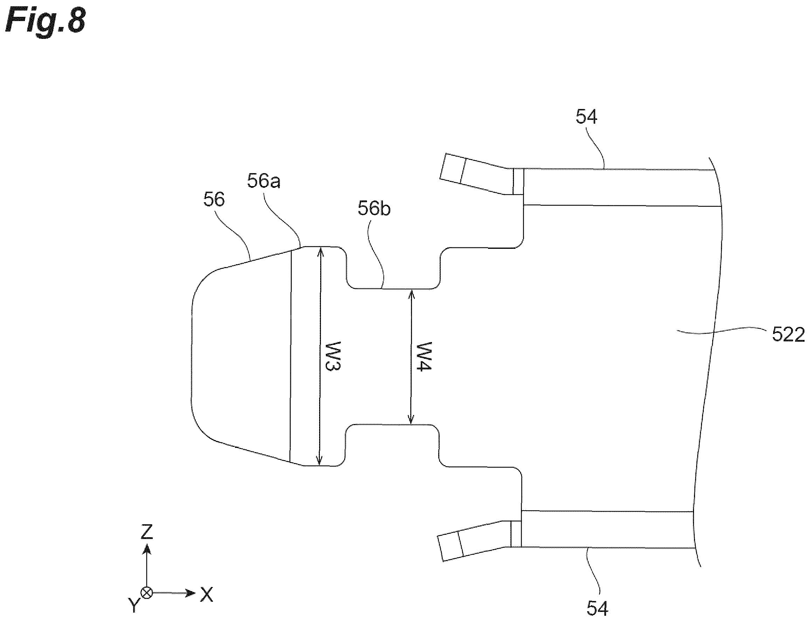

Engaging arm 522 includes an engaging portion (latch) 56. Engaging portion 56 is engaged with engaging hole 321 of connector 3. As shown in FIG. 8, engaging portion 56 is located on the opposite side of engaging arm 522 from holding arm 521. Engaging portion 56 includes a first portion 56a and a second portion 56b. First portion 56a is positioned on the opposite side of holding arm 521 with respect to second portion 56b. First portion 56a is inclined inward with respect to the X-axis direction. First portion 56a extends obliquely with respect to the X-axis direction and the Y-axis direction. First portion 56a extends so as to approach ferrule 21 as it goes from rear end surface 21b to tip end surface 21a.

A width W3 (third width) of first portion 56a in the Z-axis direction gradually decreases from the proximal end toward the distal end. Width W3 of first portion 56a in the Z-axis direction is larger than a width W4 of second portion 56b in the Z-axis direction. Width W3 of first portion 56a is smaller than width W1 of first region 32a of engaging hole 321 and larger than width W2 of second region 32b of engaging hole 321. Width W4 of second portion 56b is smaller than width W2 of second region 32b. Fixing portion 52 is attachable and detachable to and from fixing portion 32 of connector 3.

Claws 53 and 54 are located on both sides of ferrule 11 in the Z-axis direction. In the embodiment, connector 5 has four claws 53 and four claws 54. Claws 53 are formed at both ends of each holding arm 521 in the Z-axis direction. Claws 53 are located on main surfaces 21e and 21f of ferrule 21. Claws 53 have a plate-shaped member extending along main surfaces 21e and 21f. Claws 53 overlap main body 211 of ferrule 21 when viewed from the Z-axis direction. Claw 53 formed on first holding arm 521 and claw 53 formed on second holding arm 521 are separated from each other. The distance between claw 53 formed on first holding arm 521 and claw portion 53 formed on second holding arm 521 is larger than the width of claw 33 of connector 3 in the Y-axis direction. Claws 53 are formed integrally with each holding arm 521.

Claws 54 are formed at both ends of each engaging arm 522 in the Z-axis direction. Claws 54 are located on main surfaces 21e and 21f of ferrule 21. Claws 54 each have a plate shape that extends along main surfaces 21e and 21f. Claws 54 overlap main body 211 of ferrule 21 when viewed from the Z-axis direction. Claw 54 formed on first engaging arm 522 and claw 54 formed on second engaging arm 522 are separated from each other. The distance between claw 54 formed on first engaging arm 522 and claw 54 formed on second engaging arm 522 is larger than the width of claw 33 of connector 3 in the Y-axis direction.

Claws 54 are separated from claws 53. Claws 54 are integrally formed with each engaging arm 522. Claws 53 and 54 hold ferrule 21 in the Z-axis direction. Claws 53 and 54 restrict the movement of ferrule 21 in the Z-axis direction. Claw 53 restrict the movement of ferrule 21 in the X-axis direction. When ferrule 21 moves in a direction away from support 51, claws 53 are in contact with flange 212 (a step between main body 211 and flange 212).

Claws 55 are formed at both ends of support 51 in the Z-axis direction. Claw 55 is located at the center of support 51 in the Y-axis direction. Claws 55 extend from support 51 toward tip end surface 21a. Claws 55 each have a plate shape that extends along main surfaces 21e and 21f. Claws 55 are integrally formed with support 51. Connector 5 is movable with respect to ferrule 21 in the X-axis direction.

Elastic member 6 is provided between support 51 and ferrule 21. Elastic member 6 is, for example, a spring or the like. Elastic member 6 is disposed such that the plurality of optical fibers 22 and boot 23 are located inside elastic member 6. In a state in which engaging portion 56 of connector 5 is engaged with engaging hole 321 of connector 3, elastic member 6 is pressed by support 51 and ferrule 21. Thus, elastic member 6 applies an elastic force to ferrule 21 so that ferrule 11 and ferrule 21 approach each other in the X-axis direction. Tip end surface 11a of ferrule 11 and tip end surface 21a of ferrule 21 are pressed against each other by the elastic force of elastic member 6.

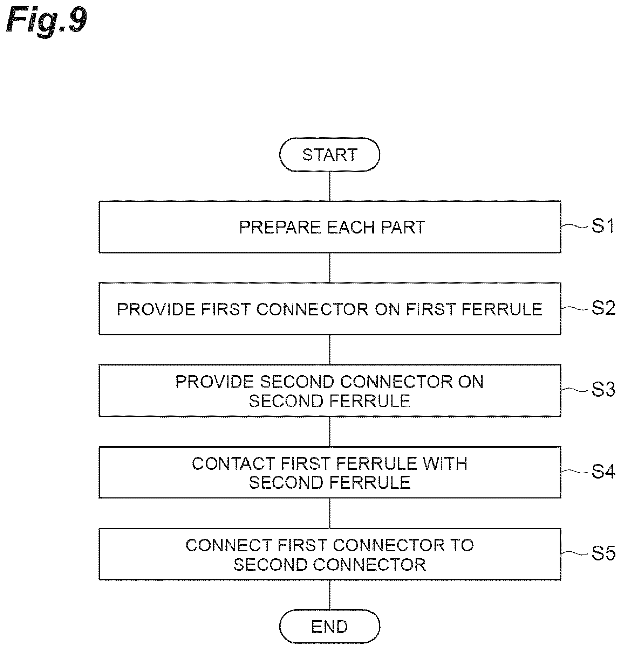

Next, a method of manufacturing optical connection structure 1 will be described. As shown in FIG. 9, first, optical connector 10, connector 3, positioning member 4, optical connector 20, connector 5, and elastic member 6 are prepared (preparing, step S1). Subsequently, connector 3 is provided on ferrule 11 (providing, step S2). In step S2, connector 3 is provided from rear end surface 11b side so that the plurality of optical fibers 12 and boot 13 penetrate through hole 31a. As shown in FIG. 10, in step S2, each positioning member 4 is inserted into positioning hole 11j from rear end surface 11b in a state where positioning member 4 is held by connector 3. In step S2, positioning member 4 is inserted into positioning hole 11j so that positioning member 4 protrudes from tip end surface 11a.

Subsequently, connector 5 is provided on ferrule 21 (providing, step S3). In step S3, connector 5 is provided from rear end surface 21b side so that the plurality of optical fibers 12 and boot 13 penetrate through hole 51a. In step S3, ferrule 21 is inserted into connector 5. Subsequently, tip end surface 11a and tip end surface 21a are brought into contact with each other (bringing, step S4). In step S4, each positioning member 4 protruding from tip end surface 11a is inserted into positioning hole 21j in a state where positioning members 4 are held by connector 3. In step S4, positioning member 4 is inserted into positioning hole 21j until tip end surface 11a and tip end surface 21a are in contact with each other.

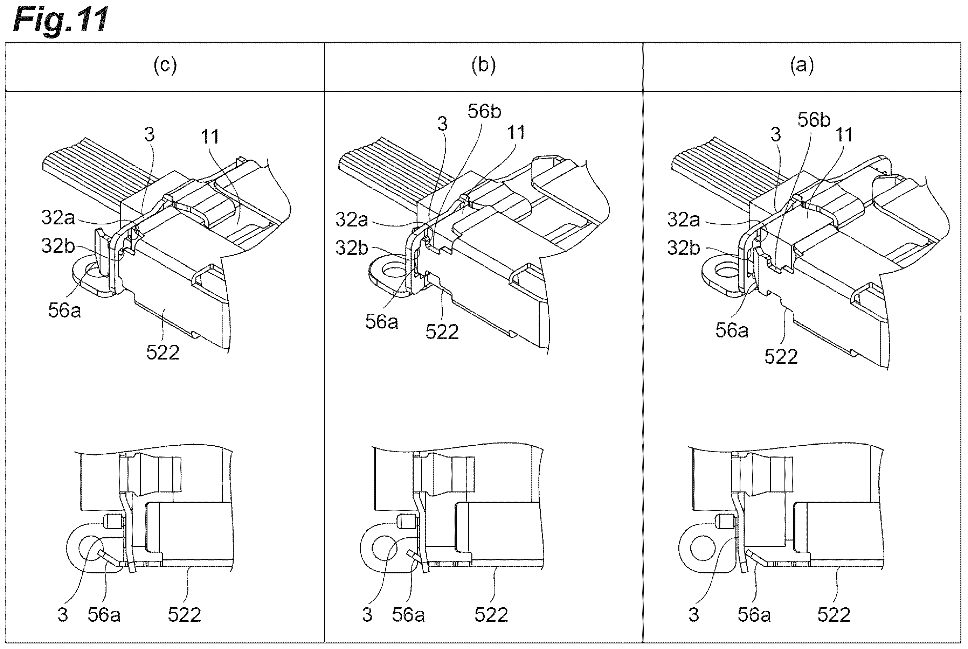

Subsequently, connector 3 and connector 5 are connected to each other (connecting, step S5). As shown in (a) portion of Fig.11, in step S5, connector 5 is moved toward connector 3 while compressing elastic member 6 in a state where tip end surface 11a and tip end surface 21a are in contact with each other. Subsequently, as shown in (b) portion of FIG. 11, each engaging portion 56 is inserted into first region 32a of engaging hole 321 while engaging arm 522 is deformed toward ferrules 11 and 21. Subsequently, as shown in (c) portion of FIG. 11, after first portion 56a of engaging portion 56 completely passes through first region 32a, engaging arm 522 deformed toward ferrules 11 and 21 is returned to its original position. Thus, each second portion 56b of engaging portion 56 is shifted from first region 32a to second region 32b of engaging hole 321. As a result, first portion 56a is engaged with engaging hole 321.

In a state in which first portion 56a is engaged with engaging hole 321, elastic member 6 is compressed, and thus tip end surface 11a and tip end surface 21a are pressed against each other by the elastic force of elastic member 6.

When connector 5 is removed from connector 3, engaging arm 522 is deformed toward ferrules 11 and 21. Thus, each second portion 56b is shifted from second region 32b to first region 32a. As a result, first portion 56a passes through first region 32a, and connector 5 moves in a direction away from connector 3.

As described above, in optical connection structure 1, connector 3 includes support 31 located in the vicinity of rear end surface 11b of ferrule 11 and fixing portion 32 formed integrally with support 31. Connector 5 includes support 51 located in the vicinity of rear end surface 21b of ferrule 21, and fixing portion 52 formed integrally with support 51. Fixing portion 32 and fixing portion 52 are fixed to each other, and thus ferrule 11 and ferrule 21 can be reliably connected to each other. Thus, the miniaturization of optical connection structure 1 can be realized. In addition, positioning member 4 is held by connector 3. When each positioning member 4 is inserted into positioning hole 21j of ferrule 21, the movement of positioning member 4 in the X-axis direction can be restricted, and the accuracy of the positioning of ferrule 11 and ferrule 21 can be prevented from being lowered. Thus, the highly accurate optical connection can be realized. According to optical connection structure 1, both miniaturization and the highly accurate optical connection can be realized.

In recent years, with the development of communication technology, the need for optical connection with a high communication speed has been increasing. Thus, there is a case where it is desired to arrange the optical connection structure on the circuit board. In such a case, the minimization of the optical connection structure is very important in order to prevent the hindrance of the cooling air.

Fixing portions 32 include engaging holes 321 located around both sides of ferrule 11 in the Y-axis direction. Fixing portions 52 include engaging arms 522 which are located on both sides of ferrule 21 in the Y-axis direction and extend along the X-axis direction. Each engaging arm 522 includes engaging portion 56 that is engaged with engaging hole 321. Thus, fixing portions 32 and fixing portions 52 can be fixed by a simple structure.

Engaging hole 321 includes first region 32a having width W1 and second region 32b which communicates with first region 32a and has width W2 smaller than width W1. Engaging portion 56 has width W3 that is less than width W1 and greater than width W2. Thus, engaging arm 522 is inserted into engaging hole 321 so that engaging portion 56 passes through fixing portion 32 in first region 32a, and then engaging arm 522 is shifted toward second region 32b, thereby engaging engaging portion 56 with fixing portion 32. Thus, fixing portions 32 and fixing portions 52 can be easily attached and detached.

Connector 3 has claw 33 which is located on one side of ferrule 11 in the Z-axis direction and holds ferrule 11 in the Z-axis direction. Connector 5 has claws 53 and 54 and which are located on both sides of ferrule 21 in the Z-axis direction and hold ferrule 21 in the Z-axis direction. Thus, it is possible to reliably hold each of ferrules 11 and 21 in the Z-axis direction.

Each of connector 3 and connector 5 is formed by a plate-shaped member. Thus, it is possible to realize further miniaturization of optical connection structure 1. Further, when handling optical connection structure 1, connector 3 or connector 5 can be held, and thus, it is possible to prevent ferrules 11 and 21 and the like from being flawed or contaminated due to ferrules 11 and 21 being directly held.

Elastic member 6 is provided between support 51 and ferrule 21. Thus, the elastic force can be applied to ferrule 21 by a simple structure. In the embodiment, elastic member 6 is a spring, and thus, elastic member 6 having different spring constants can be adopted in accordance with the required pressing load between ferrule 11 and ferrule 21. For example, when the number of optical fibers increases, the pressing load also needs to be increased, and in such a case, elastic member 6 having a high spring constant can be adopted.

Optical connection structure 1 includes ferrule 11 and ferrule 21. Thus, as described above, both of the minimization and the highly accurate optical connection can be realized.

Connector 3 has attachment 34 which is integrally formed with support 31 and mounts support 31 to the circuit board. Thus, ferrule 11 may be mounted on the circuit board via attachment 34 and support 31.

Connector 5 includes support 51 located in the vicinity of rear end surface 21b of ferrule 21, and fixing portion 52 formed integrally with support 51. Thus, fixing portion 52 is fixed to connector 3 provided on ferrule 11, so that ferrule 11 and ferrule 21 can be reliably connected to each other. Thus, the miniaturization of optical connection structure 1 can be realized. Connector 5 includes a pair of claws 53 and a pair of claws 54 that hold ferrule 21 in the Z-axis direction. Thus, it is possible to reliably hold ferrule 21 in the Z-axis direction, and contribute to the highly accurate optical connection. Thus, according to connector 5, it is possible to realize both miniaturization and the highly accurate optical connection.

Claws 54 are integrally formed with engaging arm 522. Thus, ferrule 21 can be held by a simple structure. Further, since claw 54 formed on first engaging arm 522 and claw portion 54 formed on second engaging arm 522 are separated from each other, the elastic deformation of engaging arms 522 is prevented from being hindered by claws 54.

Each first portion 56a of engaging portion 56 is inclined inward with respect to the X-axis direction. Thus, engaging portion 56 can be smoothly inserted into engaging hole 321.

In the method of manufacturing optical connection structure 1, in step S5, connector 3 and connector 5 are connected such that tip end surface 11a and tip end surface 21a are pressed against each other by the elastic force of elastic member 6. Thus, optical connection structure 1 can be miniaturized. In addition, in step S2, positioning member 4 is inserted into positioning hole 11j from rear end surface 11b in a state where positioning member 4 is held by connector 3 so that positioning member 4 protrudes from tip end surface 11a. In step S4, positioning member 4 protruding from tip end surface 11a is inserted into positioning hole 21j in a state where positioning member 4 is held by connector 3. Thus, positioning member 4 that is movable with respect to ferrule 11 can be adopted, and the accuracy of the optical connection can be prevented from being reduced due to the deformation of ferrule 11. As described above, according to the method of manufacturing optical connection structure 1, both miniaturization and the highly accurate optical connection can be realized.

Although one embodiment of the present disclosure has been described above, the present disclosure is not limited to the above-described embodiment.

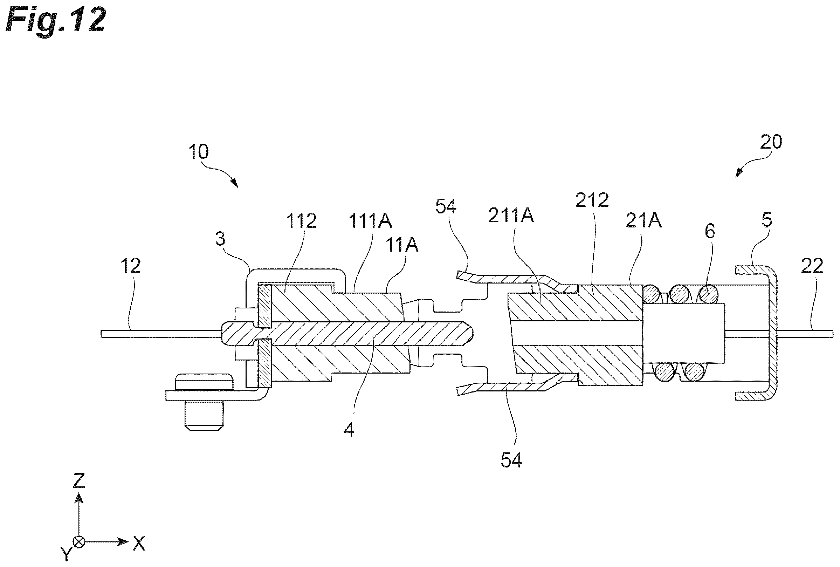

Although the embodiment shows an example in which the length of main body 111 in the X-axis direction is about three times the length of flange 112 in the X-axis direction and the length of main body 211 in the X-axis direction is about three times the length of flange 212 in the X-axis direction, the present disclosure is not limited thereto. As shown in FIG. 12, optical connector 10 may have a ferrule 11A instead of ferrule 11. Ferrule 11A may have a main body 111A instead of main body 111. The length of main body 111A in the X-axis direction may be substantially the same as the length of flange 112 in the X-axis direction. Optical connector 20 may have a ferrule 21A instead of ferrule 21. Ferrule 21A may have a main body 211A instead of main body 211. The length of main body 211A in the X-axis direction may be substantially the same as the length of flange 212 in the X-axis direction. In this case, connector 5 may not include claws 53.

In the embodiment, elastic member 6 is provided between support 51 and ferrule 21, but elastic member 6 may be provided between support 31 and ferrule 11. In this case, elastic member 6 applies an elastic force to ferrule 11. Elastic member 6 may be provided at least one of between support 51 and ferrule 21 and between support 31 and ferrule 11.

Although elastic member 6 is a spring in the embodiment, the present disclosure is not limited thereto. Elastic member 6 may be, for example, an elastic member integrally formed with connector 3 or connector 5. Elastic member 6 may be, for example, a leaf spring integrally formed with support 31 or support 51. Elastic member 6 may apply an elastic force to at least one of ferrule 11 and ferrule 21.

In the embodiment, engaging portion 56 is inserted into first region 32a while engaging arm 522 is deformed toward ferrules 11 and 21, and second portion 56b of engaging portion 56 is shifted from first region 32a to second region 32b by returning engaging arm 522 deformed toward ferrules 11 and 21 to the original position after first portion 56a of engaging portion 56 completely passes through first region 32a, but the present disclosure is not limited thereto. Second region 32b may be located close to support 31 with respect to first region 32a. In this case, engaging portion 56 is inserted into first region 32a while deforming engaging arm 522 in a direction away from ferrules 11 and 21, and after first portion 56a of engaging portion 56 completely passes through first region 32a, engaging arm 522 deformed in a direction away from ferrules 11 and 21 is returned to its original position, thereby shifting second portion 56b of engaging portion 56 from first region 32a to second region 32b. When connector 5 is removed from connector 3, engaging arm 522 is deformed in a direction away from ferrules 11 and 21. Thus, second portion 56b is shifted from second region 32b to first region 32a. As a result, first portion 56a passes through first region 32a, and connector 5 moves in a direction away from connector 3. According to such a structure, when engaging portion 56 is disengaged from engaging hole 321, engaging arm 522 needs to be deformed in a direction away from ferrules 11 and 21, and thus engaging portion 56 can be prevented from being easily disengaged from engaging hole 321. In this case, first portion 56a may be inclined outward with respect to the X-axis direction. First portion 56a may extend in a direction away from ferrule 21 as first portion 56a extends from rear end surface 21b toward tip end surface 21a.

In the embodiment, the example in which fixing portion 32 has engaging hole 321 and fixing portion 52 has engaging arm 522 is shown, but fixing portion 52 may have the same engaging hole as engaging hole 321 and fixing portion 32 may have the same engaging arm as engaging arm 522.

### Reference Signs List

1 optical connection structure
10 optical connector
11 first ferrule
11a tip end surface
11b rear end surface
11c, 11d side surface
11e, 11f main surface
11g accommodating portion
11h fiber hole
11j first positioning hole
111, 111A main body
112 flange
12 first optical fiber
13 boot
20 optical connector
21 second ferrule
21a tip end surface
21b rear end surface
21c, 21d side surface
21e, 21f main surface
21g accommodating portion
21h fiber hole
21j second positioning hole
211, 211A main body
212 flange
22 second optical fiber
23 boot
3 first connector
31 first support
31a through hole
31b through hole
32 first fixing portion
321 engaging hole
32a first region
32b second region
33 first claw
33a first portion
33b second portion
34 attachment
35 bolt
4 positioning member
4a recess
5 second connector
51 second support
51a through hole
52 second fixing portion
521 holding arm
522 engaging arm
53, 54 second claw
55 claw
56 engaging portion
56a first portion
56b second portion
6 elastic member
W1 width of first region (first width)
W2 width of second region (second width)
W3 width of first portion (third width)
W4 width of second portion

## Claims

1. A first connector (3) for being used in an optical connection structure (1) to connect a first ferrule (11) and a second ferrule (21) to each other,
wherein, in the optical connection structure (1), a relative position of the first ferrule (11) and the second ferrule (21) is defined by inserting a positioning member (4) disposed in a first positioning hole (11j), the first positioning hole (11j) extending through the first ferrule (11) in a first direction in which a first tip end surface (11a) of the first ferrule (11) and a second tip end surface (21a) of the second ferrule (21) are connected to each other, into a second positioning hole (21j) formed in the second tip end surface (21a) of the second ferrule (21),
wherein the first connector (3) is provided on the first ferrule (11),
wherein the first connector (3) includes
a first support (31) provided in the vicinity of a first rear end surface (11b) of the first ferrule (11) opposite to the first tip end surface (11a), the first support (31) being configured to support the first ferrule (11) in the first direction, and
first fixing portions (32) located around opposite sides of the first ferrule (11) in a second direction crossing the first direction and formed integrally with the first support (31),
wherein the first fixing portions (32) are attachable and detachable to and from a second connector (5) provided on the second ferrule (21), and
wherein the first connector (3) is configured to hold the positioning member (4);
**characterized in that**
the first fixing portions (32) include a pair of engaging holes (321) located around opposite sides of the first ferrule (11) in the second direction, and
wherein engaging portions (56) of the second connector (5) are configured to engage with a corresponding one of the pair of engaging holes (321).

2. The first connector (3) according to claim 1, further comprising:
a first claw (33) located on one side of the first ferrule (11) in a third direction, the first claw (33) being configured to hold the first ferrule (11) in the third direction, the third direction crossing the first direction and the second direction.

3. The first connector (3) according to claim 1 or claim 2, further comprising:
an attachment (34) integrally formed with the first support (31), the attachment (34) being configured to attach the first support (31) to a circuit board.

4. A first optical connector comprising:
the first connector (3) according to claim 1 or claim 2; and
the first ferrule (11) configured to hold a plurality of first optical fibers (12).

5. A second connector (5) for being used in an optical connection structure (1) to connect a first ferrule (11) and a second ferrule (21) to each other,
wherein the second connector (5) is provided on the second ferrule (21),
wherein the second connector (5) includes
a second support (51) provided in the vicinity of a second rear end surface (21b) of the second ferrule (21) opposite to a second tip end surface (21a) of the second ferrule (21), the second support (51) being configured to support the second ferrule (21) in a first direction in which a first tip end surface (11a) of the first ferrule (11) and the second tip end surface (21a) of the second ferrule (21) are connected to each other,
second fixing portions (52) located around opposite sides of the second ferrule (21) in a second direction crossing the first direction, the second fixing portions (52) being formed integrally with the second support (51), and
a pair of second claws (53, 54) located around opposite sides of the second ferrule (21) in a third direction, the pair of second claws (53, 54) being configured to hold the second ferrule (21) in the third direction, the third direction crossing the first direction and the second direction, and
wherein the second fixing portions (52) are attachable and detachable to and from a first connector (3) provided on the first ferrule (11);
**characterized in that**
the second fixing portions (52) include a pair of arms (521, 522) located around opposite sides of the second support (51) in the second direction, each of the pair of arms (521, 522) extending along the first direction, and
wherein the pair of arms (521, 522) each include an engaging portion (56) configured to engage with an engaging hole of the first connector (3).

6. The second connector (5) according to claim 5,
wherein the engaging portion (56) include a portion inclined inward or outward with respect to the first direction.

7. A second optical connector comprising:
the second connector (5) according to claim 5 or claim 6; and
the second ferrule (21) configured to hold a plurality of second optical fibers (22).

8. An optical connection structure (1) for connecting a first ferrule (11) and a second ferrule (21) to each other, the optical connection structure (1) comprising:
the first connector (3) according to claim 1,
the second connector (5) according to claim 5,
a positioning member (4) configured to define a relative position of the first ferrule (11) and the second ferrule (21) by being disposed in a first positioning hole (11j) extending through the first ferrule (11) in a first direction in which the first tip end surface (11a) of the first ferrule (11) and the second tip end surface (21a) of the second ferrule (21) are connected to each other and by being inserted in a second positioning hole (21j) formed in the second tip end surface (21a) of the second ferrule (21); and
an elastic member (6) configured to apply an elastic force to at least one of the first ferrule (11) and the second ferrule (21) such that the first ferrule (11) and the second ferrule (21) come closer to each other in the first direction.

9. The optical connection structure (1) according to claim 8,
wherein the first fixing portions (32) include a pair of engaging holes (321) located around the opposite sides of the first ferrule (11) in the second direction,
wherein the second fixing portions (52) include a pair of arms (521, 522) located around the opposite sides of the second ferrule (21) in the second direction, each of the second fixing portions (52) extending along the first direction, and
wherein the pair of arms (521, 522) each include an engaging portion (56) configured to engage with a corresponding one of the pair of engaging holes (321).

10. The optical connection structure (1) according to claim 9,
wherein the pair of engaging holes (321) each includes a first region (32a) having a first width and a second region (32b) having a second width smaller than the first width, the second region (32b) communicating with the first region (32a), and
wherein the engaging portion (56) has a third width smaller than the first width and larger than the second width.

11. The optical connection structure (1) according to any one of claim 8 to claim 10,
wherein the first connector (3) further includes a first claw (33) located on one side of the first ferrule (11) in a third direction, the first claw (33) being configured to hold the first ferrule (11) in the third direction, the third direction crossing the first direction and the second direction, and
wherein the second connector (5) further includes second claws (53, 54) located on opposite sides of the second ferrule (21) in the third direction, the second claws (53, 54) being configured to hold the second ferrule (21) in the third direction.

12. The optical connection structure (1) according to any one of claim 8 to claim 11,
wherein the elastic member (6) is provided at least one of between the first support (31) and the first ferrule (11) and between the second support (51) and the second ferrule (21).

13. The optical connection structure (1) according to any one of claim 8 to claim 12, further comprising:
the first ferrule (11) configured to hold a plurality of first optical fibers (12); and
the second ferrule (21) configured to hold a plurality of second optical fibers (22).

## Patentansprüche

1. Ein erster Steckverbinder (3) zur Verwendung in einer optischen Verbindungsstruktur (1) zum Verbinden einer ersten Hülse (11) und einer zweiten Hülse (21) miteinander,
wobei in der optischen Verbindungsstruktur (1) eine relative Position der ersten Hülse (11) und der zweiten Hülse (21) durch das Einführen eines Positionierungselements (4) definiert wird, das in einem ersten Positionierungsloch (11j) angeordnet ist, wobei sich das erste Positionierungsloch (11j) durch die erste Hülse (11) in einer ersten Richtung, in der eine erste vordere Endfläche (11a) der ersten Hülse (11) und eine zweite vordere Endfläche (21a) der zweiten Hülse (21) miteinander verbunden sind, in ein zweites Positionierungsloch (21j) hinein erstreckt, das in der zweiten vorderen Endfläche (21a) der zweiten Hülse (21) ausgebildet ist,
wobei der erste Steckverbinder (3) an der ersten Hülse (11) vorgesehen ist,
wobei der erste Steckverbinder (3) aufweist
eine erste Lagerung (31), die in der Nähe einer ersten hinteren Endfläche (11b) der ersten Hülse (11) gegenüber der ersten vorderen Endfläche (11a) vorgesehen ist, wobei die erste Lagerung (31) dazu eingerichtet ist, die erste Hülse (11) in der ersten Richtung zu lagern, und
erste Befestigungsabschnitte (32), die rund um gegenüberliegende Seiten der ersten Hülse (11) in einer zweiten Richtung angeordnet sind, die die erste Richtung kreuzt, und die einstückig mit der ersten Lagerung (31) ausgebildet sind,
wobei die ersten Befestigungsabschnitte (32) an einem zweiten Steckverbinder (5), der an der zweiten Hülse (21) vorgesehen ist, anbringbar und von diesem abnehmbar sind, und
wobei der erste Steckverbinder (3) dazu eingerichtet ist, das Positionierungselement (4) zu halten;
**dadurch gekennzeichnet, dass**
die ersten Befestigungsabschnitte (32) ein Paar von Eingriffslöchern (321) aufweisen, die rund um gegenüberliegende Seiten der ersten Hülse (11) in der zweiten Richtung angeordnet sind, und
wobei Eingriffsabschnitte (56) des zweiten Verbinders (5) eingerichtet sind, in ein entsprechendes von dem Paar Eingriffslöcher (321) einzugreifen.

2. Der erste Steckverbinder (3) nach Anspruch 1, ferner umfassend:
eine erste Klaue (33), die auf einer Seite der ersten Hülse (11) in einer dritten Richtung angeordnet ist, wobei die erste Klaue (33) dazu eingerichtet ist, die erste Hülse (11) in der dritten Richtung zu halten, wobei die dritte Richtung die erste Richtung und die zweite Richtung kreuzt.

3. Der erste Steckverbinder (3) nach Anspruch 1 oder Anspruch 2, ferner umfassend:
eine Befestigung (34), die einstückig mit der ersten Lagerung (31) ausgebildet ist, wobei die Befestigung (34) dazu eingerichtet ist, die erste Lagerung (31) an einer Leiterplatte zu befestigen.

4. Ein erster optischer Steckverbinder, umfassend:
den ersten Steckverbinder (3) nach Anspruch 1 oder Anspruch 2; und
die erste Hülse (11), die dazu eingerichtet ist, eine Vielzahl von ersten optischen Fasern (12) zu halten.

5. Ein zweiter Steckverbinder (5) zur Verwendung in einer optischen Verbindungsstruktur (1) zum Verbinden einer ersten Hülse (11) und einer zweiten Hülse (21) miteinander,
wobei der zweite Steckverbinder (5) an der zweiten Hülse (21) vorgesehen ist,
wobei der zweite Steckverbinder (5) aufweist
eine zweite Lagerung (51), die in der Nähe einer zweiten hinteren Endfläche (21b) der zweiten Hülse (21) gegenüber einer zweiten vorderen Endfläche (21a) der zweiten Hülse (21) vorgesehen ist, wobei die zweite Lagerung (51) dazu eingerichtet ist, die zweite Hülse (21) in einer ersten Richtung zu lagern, in der eine erste vordere Endfläche (11a) der ersten Hülse (11) und die zweite vordere Endfläche (21a) der zweiten Hülse (21) miteinander verbunden sind,
zweite Befestigungsabschnitte (52), die rund um gegenüberliegende Seiten der zweiten Hülse (21) in einer zweiten Richtung angeordnet sind, die die erste Richtung kreuzt, wobei die zweiten Befestigungsabschnitte (52) einstückig mit der zweiten Lagerung (51) ausgebildet sind, und
ein Paar zweite Klauen (53, 54), die rund um gegenüberliegende Seiten der zweiten Hülse (21) in einer dritten Richtung angeordnet sind, wobei das Paar zweite Klauen (53, 54) dazu eingerichtet ist, dass es die zweite Hülse (21) in der dritten Richtung hält, wobei die dritte Richtung die erste Richtung und die zweite Richtung kreuzt, und
wobei die zweiten Befestigungsabschnitte (52) an einem ersten Steckverbinder (3), der an der ersten Hülse (11) vorgesehen ist, anbringbar und von diesem abnehmbar sind;
**dadurch gekennzeichnet, dass**
die zweiten Befestigungsabschnitte (52) ein Paar Arme (521, 522) aufweisen, die rund um gegenüberliegende Seiten der zweiten Lagerung (51) in der zweiten Richtung angeordnet sind, wobei sich jedes von dem Paar Arme (521, 522) entlang der ersten Richtung erstreckt, und
wobei das Paar Arme (521, 522) jeweils einen Eingriffsabschnitt (56) aufweist, der dazu eingerichtet ist, in ein Eingriffsloch des ersten Steckverbinders (3) einzugreifen.

6. Der zweite Steckverbinder (5) nach Anspruch 5,
wobei der Eingriffsabschnitt (56) einen Abschnitt aufweist, der in Bezug auf die erste Richtung nach innen oder außen geneigt ist.

7. Ein zweiter optischer Steckverbinder, umfassend:
den zweiten Steckverbinder (5) nach Anspruch 5 oder Anspruch 6; und
die zweite Hülse (21), die dazu eingerichtet ist, eine Vielzahl von zweiten optischen Fasern (22) zu halten.

8. Optische Verbindungsstruktur (1) zum Verbinden einer ersten Hülse (11) und einer zweiten Hülse (21) miteinander, wobei die optische Verbindungsstruktur (1) umfasst:
den ersten Steckverbinder (1) nach Anspruch 1,
den zweiten Steckverbinder (5) nach Anspruch 5,
ein Positionierungselement (4), das dazu eingerichtet ist, eine relative Position der ersten Hülse (11) und der zweiten Hülse (21) zu definieren, indem es in einem ersten Positionierungsloch (11j) angeordnet ist, das sich durch die erste Hülse (11) in einer ersten Richtung erstreckt, in der die erste vordere Endfläche (11a) der ersten Hülse (11) und die zweite vordere Endfläche (21a) der zweiten Hülse (21) miteinander verbunden sind, und indem es in ein zweites Positionierungsloch (21j), das in der zweiten vorderen Endfläche (21a) der zweiten Hülse (21) ausgebildet ist, eingeführt ist; und
ein elastisches Element (6), das dazu eingerichtet ist, auf mindestens eine der ersten Hülse (11) und der zweiten Hülse (21) eine elastische Kraft auszuüben, sodass sich die erste Hülse (11) und die zweite Hülse (21) in der ersten Richtung einander annähern.

9. Optische Verbindungsstruktur (1) nach Anspruch 8,
wobei die ersten Befestigungsabschnitte (32) ein Paar von Eingriffslöchern (321) aufweisen, die rund um die gegenüberliegenden Seiten der ersten Hülse (11) in der zweiten Richtung angeordnet sind,
wobei die zweiten Befestigungsabschnitte (52) ein Paar Arme (521, 522) aufweisen, die rund um die gegenüberliegenden Seiten der zweiten Hülse (21) in der zweiten Richtung angeordnet sind, wobei sich jeder der zweiten Befestigungsabschnitte (52) entlang der ersten Richtung erstreckt, und
wobei das Paar Arme (521, 522) jeweils einen Eingriffsabschnitt (56) aufweist, der dazu eingerichtet ist, in ein entsprechendes von dem Paar Eingriffslöcher (321) einzugreifen.

10. Optische Verbindungsstruktur (1) nach Anspruch 9,
wobei das Paar von Eingriffslöchern (321) jeweils einen ersten Bereich (32a) mit einer ersten Breite und einen zweiten Bereich (32b) mit einer zweiten Breite aufweist, die kleiner ist als die erste Breite, wobei der zweite Bereich (32b) mit dem ersten Bereich (32a) in Verbindung steht, und
wobei der Eingriffsabschnitt (56) eine dritte Breite aufweist, die kleiner als die erste Breite und größer als die zweite Breite ist.

11. Optische Verbindungsstruktur (1) nach einem der Ansprüche 8 bis 10,
wobei der erste Steckverbinder (3) ferner eine erste Klaue (33) aufweist, die auf einer Seite der ersten Hülse (11) in einer dritten Richtung angeordnet ist, wobei die erste Klaue (33) dazu eingerichtet ist, die erste Hülse (11) in der dritten Richtung zu halten, wobei die dritte Richtung die erste Richtung und die zweite Richtung kreuzt, und
wobei der zweite Steckverbinder (5) ferner zweite Klauen (53, 54) aufweist, die in der dritten Richtung auf gegenüberliegenden Seiten der zweiten Hülse (21) angeordnet sind, wobei die zweiten Klauen (53, 54) dazu eingerichtet sind, die zweite Hülse (21) in der dritten Richtung zu halten.

12. Optische Verbindungsstruktur (1) nach einem der Ansprüche 8 bis 11,
wobei das elastische Element (6) an mindestens einer Stelle zwischen der ersten Lagerung (31) und der ersten Hülse (11) und zwischen der zweiten Lagerung (51) und der zweiten Hülse (21) vorgesehen ist.

13. Optische Verbindungsstruktur (1) nach einem der Ansprüche 8 bis 12, ferner umfassend:
die erste Hülse (11), die dazu eingerichtet ist, eine Vielzahl von ersten optischen Fasern (12) zu halten; und
die zweite Hülse (21), die dazu eingerichtet ist, eine Vielzahl von zweiten optischen Fasern (22) zu halten.

## Revendications

1. Premier connecteur (3) pour être utilisé dans une structure de connexion optique (1) pour relier une première virole (11) et une deuxième virole (21) l'une à l'autre,
dans lequel, dans la structure de connexion optique (1), une position relative de la première virole (11) et de la deuxième virole (21) est définie par l'insertion d'un élément de positionnement (4) disposé dans un premier trou de positionnement (11j), le premier trou de positionnement (11j) s'étendant à travers la première virole (11) dans une première direction dans laquelle une première surface d'extrémité de pointe (11a) de la première virole (11) et une deuxième surface d'extrémité de pointe (21a) de la deuxième virole (21) sont reliées l'une à l'autre, dans un deuxième trou de positionnement (21j) formé dans la deuxième surface d'extrémité de pointe (21a) de la deuxième virole (21),
dans lequel le premier connecteur (3) est prévu sur la première virole (11),
dans lequel le premier connecteur (3) comprend
un premier support (31) prévu à proximité d'une première surface d'extrémité arrière (11b) de la première virole (11), opposé à la première surface d'extrémité de pointe (11a), le premier support (31) étant conçu pour supporter la première virole (11) dans la première direction, et
des premières parties de fixation (32) situées autour des côtés opposés de la première virole (11) dans une deuxième direction croisant la première direction et formées d'un seul tenant avec le premier support (31),
dans lequel les premières parties de fixation (32) peuvent être attachées à et détachées d'un deuxième connecteur (5) prévu sur la deuxième virole (21), et
dans lequel le premier connecteur (3) est conçu pour maintenir l'élément de positionnement (4) ;
**caractérisé en ce que**
les premières parties de fixation (32) comprennent une paire de trous d'engagement (321) situées autour des côtés opposés de la première virole (11) dans la deuxième direction, et
dans lequel les parties d'engagement (56) du deuxième connecteur (5) sont conçues pour s'engager dans l'un correspondant de la paire de trous d'engagement (321).

2. Premier connecteur (3) selon la revendication 1, comprenant en outre :
une première griffe (33) située sur un côté de la première virole (11) dans une troisième direction, la première griffe (33) étant conçue pour maintenir la première virole (11) dans la troisième direction, ladite troisième direction croisant la première direction et la deuxième direction.

3. Premier connecteur (3) selon la revendication 1 ou la revendication 2, comprenant en outre :
une fixation (34) formée d'un seul tenant avec le premier support (31), ladite fixation (34) étant conçue pour attacher le premier support (31) à une carte de circuit imprimé.

4. Premier connecteur optique comprenant :
le premier connecteur (3) selon la revendication 1 ou la revendication 2 ; et
la première virole (11) conçue pour maintenir une pluralité de premières fibres optiques (12).

5. Deuxième connecteur (5) pour être utilisé dans une structure de connexion optique (1) pour relier une première virole (11) et une deuxième virole (21) l'une à l'autre,
dans lequel le deuxième connecteur (5) est prévu sur la deuxième virole (21),
dans lequel le deuxième connecteur (5) comprend
un deuxième support (51) prévu à proximité d'une deuxième surface d'extrémité arrière (21b) de la deuxième virole (21), opposé à une deuxième surface d'extrémité de pointe (21a) de la deuxième virole (21), le deuxième support (51) étant configuré pour supporter la deuxième virole (21) dans une première direction dans laquelle une première surface d'extrémité de pointe (11a) de la première virole (11) et la deuxième surface d'extrémité de pointe (21a) de la deuxième virole (21) sont reliées l'une à l'autre,
des deuxièmes parties de fixation (52) situées autour des côtés opposés de la deuxième virole (21) dans une deuxième direction croisant la première direction, les deuxièmes parties de fixation (52) étant formées d'un seul tenant avec le deuxième support (51), et
une paire de deuxièmes griffes (53, 54) situées autour des côtés opposés de la deuxième virole (21) dans une troisième direction, la paire de deuxièmes griffes (53, 54) étant conçue pour maintenir la deuxième virole (21) dans la troisième direction, ladite troisième direction croisant la première direction et la deuxième direction, et
dans lequel les deuxièmes parties de fixation (52) peuvent être attachés à et détachées d'un premier connecteur (3) prévu sur la première virole (11) ;
**caractérisé en ce que**
les deuxièmes parties de fixation (52) comprennent une paire de bras (521, 522) situées autour des côtés opposés du deuxième support (51) dans la deuxième direction, chacun de la paire de bras (521, 522) s'étendant le long de la première direction, et
dans lequel la paire de bras (521, 522) comprend chacun une partie d'engagement (56) conçue pour s'engager dans un trou d'engagement du premier connecteur (3).

6. Deuxième connecteur (5) selon la revendication 5,
dans lequel la partie d'engagement (56) comporte une partie inclinée vers l'intérieur ou vers l'extérieur par rapport à la première direction.

7. Deuxième connecteur optique comprenant :
le deuxième connecteur (5) selon la revendication 5 ou la revendication 6 ; et
la deuxième virole (21) conçue pour maintenir une pluralité de deuxièmes fibres optiques (22).

8. Structure de connexion optique (1) pour relier une première virole (11) et une deuxième virole (21) l'une à l'autre, la structure de connexion optique (1) comprenant :
le premier connecteur (3) selon la revendication 1,
le deuxième connecteur (5) selon la revendication 5,
un élément de positionnement (4) conçu pour définir une position relative de la première virole (11) et de la deuxième virole (21) en étant disposé dans un premier trou de positionnement (11j) s'étendant à travers la première virole (11) dans une première direction dans laquelle la première surface d'extrémité de pointe (11a) de la première virole (11) et la deuxième surface d'extrémité de pointe (21a) de la deuxième virole (21) sont reliées l'une à l'autre, et en étant inséré dans un deuxième trou de positionnement (21j) formé dans la deuxième surface d'extrémité de pointe (21a) de la deuxième virole (21) ; et
un élément élastique (6) conçu pour exercer une force élastique sur au moins une de la première virole (11) et de la deuxième virole (21), de telle sorte que la première virole (11) et la deuxième virole (21) se rapprochent l'une de l'autre dans la première direction.

9. Structure de connexion optique (1) selon la revendication 8,
dans laquelle les premières parties de fixation (32) comprennent une paire de trous d'engagement (321) situées autour des côtés opposés de la première virole (11) dans la deuxième direction,
dans laquelle les deuxièmes parties de fixation (52) comprennent une paire de bras (521, 522) situées autour des côtés opposés de la deuxième virole (21) dans la deuxième direction, chacune des deuxièmes parties de fixation (52) s'étendant le long de la première direction, et
dans laquelle la paire de bras (521, 522) comprend chacun une partie d'engagement (56) conçue pour s'engager dans l'un correspondant de la paire de trous d'engagement (321).

10. Structure de connexion optique (1) selon la revendication 9,
dans laquelle la paire de trous d'engagement (321) comprend chacun une première zone (32a) présentant une première largeur et une deuxième zone (32b) présentant une deuxième largeur inférieure à la première largeur, la deuxième zone (32b) communiquant avec la première zone (32a), et
dans laquelle la partie d'engagement (56) présente une troisième largeur inférieure à la première largeur et supérieure à la deuxième largeur.

11. Structure de connexion optique (1) selon l'une quelconque des revendications 8 à 10,
dans laquelle le premier connecteur (3) comprend en outre une première griffe (33) située sur un côté de la première virole (11) dans une troisième direction, la première griffe (33) étant conçue pour maintenir la première virole (11) dans la troisième direction, ladite troisième direction croisant la première direction et la deuxième direction, et
dans laquelle le deuxième connecteur (5) comprend en outre des deuxièmes griffes (53, 54) situées sur des côtés opposés de la deuxième virole (21) dans la troisième direction, les deuxièmes griffes (53, 54) étant conçues pour maintenir la deuxième virole (21) dans la troisième direction.

12. Structure de connexion optique (1) selon l'une quelconque des revendications 8 à 11,
dans laquelle l'élément élastique (6) est prévu au moins entre le premier support (31) et la première virole (11) et entre le deuxième support (51) et la deuxième virole (21).

13. Structure de connexion optique (1) selon l'une quelconque des revendications 8 à 12, comprenant en outre :
la première virole (11) conçue pour maintenir une pluralité de premières fibres optiques (12) ; et
la deuxième virole (21) conçue pour maintenir une pluralité de deuxièmes fibres optiques (22).
